# EUROPEAN PATENT APPLICATION

(11) **EP 2 835 853 A1**
(43) Date of publication of application: **11.02.2015**
(21) Application number: 13771970.4
(22) Date of filing: 28.03.2013
(51) Int. Cl.: H01M 8/06, H01M 8/04, H01M 8/10, H01M 8/12

(54) **FUEL CELL SYSTEM**

(30) Priority: 03.04.2012 JP 2012084979
(71) Applicant: Konica Minolta, Inc., Tokyo 100-7015 (JP)
(72) Inventor: NODA, Atsuhiro, Hino-Shi Tokyo 191-8511 (JP)
(74) Representative: Hoffmann Eitle
(86) International application number: PCT/JP2013/059170
(87) International publication number: WO 2013/150946

(57) **Abstract**

This fuel cell system is provided with a fuel generation unit which generates a fuel through a chemical reaction, a fuel cell unit which generates power using the fuel supplied from the fuel generation unit, a circulation unit which forcibly circulates, between the fuel generation unit and the fuel cell unit, a gas containing fuel or products generated in power generation, and a control unit which controls the circulation unit. Further, the control unit periodically changes the flow amount of the gas circulated by the circulation unit.

## Description

### Technical Field

The present invention relates to a fuel cell system provided with a fuel generation unit.

### Background Art

In a fuel cell, a cell typically has a structure where a solid polyelectrolyte membrane which employs a solid polymer ion exchange membrane, a solid oxide electrolyte membrane which employs yttria-stabilized zirconia (YSZ), or the like is sandwiched between a fuel electrode (anode) and an oxidant electrode (cathode). Such a cell is further provided with a fuel gas flow passage to supply a fuel gas (such as hydrogen gas) to the fuel electrode and an oxidizing gas flow passage to supply an oxidizing gas (such as oxygen gas or air) to the oxidant electrode, and power is generated with the fuel gas and the oxidizing gas supplied through these flow passages to the fuel electrode and the oxidant electrode, respectively.

Since the fuel cell is theoretically capable of generating electric energy at a high efficiency, it contributes to saving energy, and the fuel cell also provide a highly eco-friendly power generating method, and thus the fuel cell is expected as a very powerful solution to energy and environmental problems on a global scale.

### Citation List

### Patent Literature

Patent Literature 1 WO2011/040182
Patent Literature 2 WO2011/052283

### Summary of Invention

### Technical Problem

As a secondary battery type fuel cell system which is capable of generating power and rechargeable, there has been proposed a system where a fuel electrode and a fuel generating member are disposed in a sealed space, and reactions are promoted by natural diffusion (see Patent Literature 1 and Patent Literature 2). With natural diffusion, however, a speed of reaction with a fuel gas is limited, and this disadvantageously prevents the fuel cell from outputting high power. Here, it is desirable that this problem be solved while improving a fuel cell generating efficiency as high as possible.

In view of the above-mentioned situation, an object of the present invention is to provide a fuel cell system that is capable of achieving both high output and high fuel generating efficiency.

### Solution to Problem

To achieve the above object, a fuel cell system according to the present invention includes a fuel generation unit that generates a fuel through a chemical reaction; a fuel cell unit that performs power generation by using the fuel supplied from the fuel generation unit; a circulation unit that forcibly circulates gas that includes the fuel or a product of the power generation between the fuel generation unit and the fuel cell unit; and a control unit that controls the circulation unit. Here, the control unit periodically changes a flow rate of the gas that is made to circulate by the circulation unit.

### Advantageous Effects of Invention

According to a fuel cell system of the present invention, it is possible to achieve both high output and high fuel cell generating efficiency.

### Brief Description of the Drawings

Fig. 1 is a diagram schematically showing a structure of a fuel cell system according to one embodiment of the present invention;
Fig. 2 is a diagram showing an example of a fuel generation unit and a container in which the fuel generation unit is held;
Fig. 3 is a diagram showing an example of a fuel generation unit and a container in which the fuel generation unit is held;
Fig. 4 is a diagram showing another example of the fuel generation unit;
Fig. 5 is a time chart showing how energy is supplied to a circulation unit;
Fig. 6 is a time chart showing how energy is supplied to the circulation unit;
Fig. 7A is a time chart showing a first example of control performed by a control unit;
Fig. 7B is a time chart showing the first example of control performed by the control unit;
Fig. 7C is a time chart showing the first example of control performed by the control unit;
Fig. 8 is a time chart showing a second example of control performed by the control unit;
Fig. 9 is a diagram showing a modified example of the fuel cell system according to the one embodiment of the present invention;
Fig. 10 is a time chart showing a third example of control performed by the control unit;
Fig. 11 is a time chart showing a fourth example of control performed by the control unit;
Fig. 12 is a time chart showing a fifth example of control performed by the control unit;
Fig. 13 is a time chart showing the fifth example of control performed by the control unit; and
Fig. 14 is a time chart showing a sixth example of control performed by the control unit.

### Description of Embodiments

Embodiments of the present invention will be described below with reference to accompanying drawings. It should be noted that the present invention is not limited to the embodiments described below.

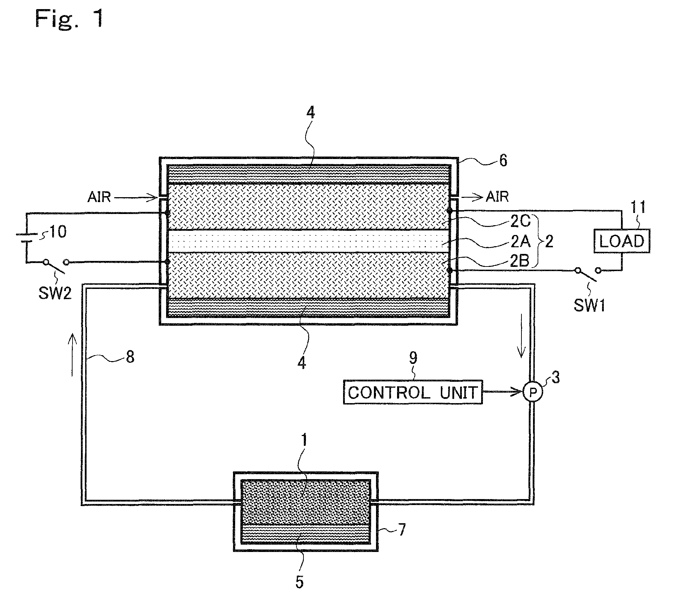

Fig. 1 is a diagram schematically showing a structure of a fuel cell system according to one embodiment of the present invention. The fuel cell system according to the one embodiment of the present invention includes a fuel generation unit 1, a fuel cell unit 2, a circulation unit 3, a heater 4 for adjusting temperature of the fuel cell unit 2, a heater 5 for adjusting temperature of the fuel generation unit 1, a container 6 that holds therein the fuel cell unit 2 and the heater 4, a container 7 that holds therein the fuel generation unit 1 and the heater 5, a pipe 8 for circulating gas between the fuel generation unit 1 and the fuel cell unit 2, and a control unit 9 that controls the circulation unit 3.

As a material of the fuel generation unit 1, for example, there can be used one that has a metal as a base material and is formed adding a metal or a metal oxide to the base material, that generates a fuel (such as hydrogen) through an oxidation reaction with an oxidizing gas (such as water vapor), and that can be recovered through a reduction reaction with a reducing gas (such as hydrogen). Examples of the metal for the base material include, for example, Ni, Fe, Pd, V, Mg, and an alloy of any of these metals, and in particular, Fe is preferable because of its low cost and workability. Examples of the metal to be added include Al, Rh, Pd, Cr, Ni, Cu, Co, V, and Mo, and examples of the metal oxide to be added include SiO₂ and TiO₂. It should be noted that the metal for the base material and the metal to be added are different metals. In the present embodiment, as the fuel generation unit 1, a fuel generating member composed mainly of Fe is employed.

The fuel generating member composed mainly of Fe is capable of consuming water vapor as the oxidizing gas and generating hydrogen gas as the fuel (the reducing gas) through an oxidation reaction shown in formula (1) below.

4H₂O+3Fe → 4H₂+Fe₃O₄ (1)

With progress of the oxidation reaction of Fe of formula (1) above, change of iron into iron oxide progresses to gradually reduce an amount of remaining iron, but thorugh a reaction reverse to the reaction shown in formula (1), that is, a reduction reaction shown in formula (2) below, the fuel generation unit 1 can be recovered. Note that the oxidation reaction of Fe shown in formula (1) above and the reduction reaction shown in formula (2) below are both able to be performed even at a low temperature such as a temperature lower than 600°C.

4H₂+Fe₃O₄ → 3Fe+4H₂O (2)

In the fuel generation unit 1, a large surface area per unit volume of the fuel generation unit 1 is desirable for higher reactivity of the fuel generation unit 1. A measure to increase the surface area of the fuel generation unit 1 per unit volume is, for example, to break the main material of the fuel generation unit 1 into fine particles and mold the fuel generation unit 1 out of the fine particles. An example of method to make such fine particles is crushing by using, for example, a ball mill. Moreover, the surface area of the fine particles may be further increased by generating cracks by, for example, a mechanical method, or alternatively, the surface area of the fine particles may be further increased by roughening the surface of the fine particles by a method such as acid treatment, alkali treatment, and blasting. The fuel generation unit 1 may be one that is formed by compressing the fine particles with air space that is large enough to allow passage of gas left among the fine particles, or alternatively, the fuel generation unit 1 may be one that is formed by arranging in a space a large number of pellets made of the fine particles.

The fuel cell unit 2 is, as shown in Fig. 1, a membrane electrode assembly (MEA) formed by joining a fuel electrode 2B and an air electrode 2C, which is an oxidant electrode, to one and the other side of an electrolyte membrane 2A. It should be noted that, instead of disposing only one MEA as shown in Fig. 1, a plurality of MEAs may be disposed, or further, the plurality of MEAs may be arranged into a laminate structure.

The circulation unit 3 is provided to forcibly circulate gas between the fuel generation unit 1 and the fuel cell unit 2 in a direction indicated by an arrow shown in Fig. 1 by using mechanical energy, and, for example, a compressor, a fan, a blower, a pump, or the like may be used in the circulation unit 3.

The container 6 includes a circulation gas supply port for supplying circulation gas to the fuel electrode 2B, a circulation gas discharge port for discharging the circulation gas from the fuel electrode 2B, an air supply port for supplying air to the air electrode 2C, and an air discharge port for discharging the air from the air electrode 2C. The flow of air may be controlled, for example, by using a fan or the like disposed outside the container 6. It should be noted the air-flow direction is not limited to the direction shown in Fig. 1, and may be opposite to the direction shown in Fig. 1. It should also be noted that, although air is used as the oxidizing gas in the present embodiment, an oxidizing gas other than air may be used instead.

The container 7 includes a circulation gas supply port for supplying the circulating gas to the fuel generation unit 1 and a circulation gas discharge port for discharging the circulating gas from the fuel generation unit 1.

The control unit 9 periodically changes a flow rate of gas circulated by the circulation unit 3. The flow rate of gas herein means an amount (volume) of gas that flows through a fixed cross-section in a unit period of time, and can be measured by using a flow meter. In the present embodiment, the control unit 9 periodically changes the flow rate of the gas circulated by the circulation unit 3 by repeated alternate use of two flow rates. For example, in a case where the circulation unit 3 is a fan, the control unit 9 may perform ON/OFF control of the fan, or may alternately switch a rotation speed of the fan between two speeds. Furthermore, for example, when the circulation unit 3 is a diaphragm circulator, the control unit 9 may alternately switch a modification cycle of the diaphragm between two phases.

As a material of the electrolyte membrane 2A, for example, a solid oxide electrolyte using yttria-stabilized zirconia (YSZ) can be used, or alternatively, for example, a solid polyelectrolyte, such as Nafion (a trademark of E. I. du Pont de Nemours & Co.), a cation conductive polymer, and an anion conductive polymer, can be used; however, the material of the electrolyte membrane 2A is not limited to these materials, and any material may be used as long as it has all the characteristics required to be the electrolyte of the fuel cell, such as a material that transmits hydrogen ions or oxygen ions, and a material that transmits hydroxide ions. The present embodiment uses, as the electrolyte membrane 2A, an electrolyte that transmits oxygen ions or hydroxide ions, such as a solid oxide electrolyte using yttria-stabilized zirconia (YSZ).

In a power generation operation, a switch SW1 is turned ON and a switch SW2 is turned OFF, to thereby electrically connect the fuel cell unit 2 to a load 11.

For example, in a case where hydrogen is used as the fuel, in the present embodiment, in the power generation operation, a reaction shown in formula (3) below takes place at the fuel electrode 2B.

H₂+_{O}²⁻ → H₂O+2e⁻ (3)

Electrons generated by the reaction shown in formula (3) above move from the fuel electrode 2B, to pass through the load 11, and reach the air electrode 2C, where a reaction shown in formula (4) below takes place.

1/2O₂+2e⁻ → O²⁻ (4)

Subsequently, oxygen ions generated through the reaction shown in formula (4) above move to pass through the electrolyte membrane 2A, and reach the fuel electrode 2B. By repeating the above series of reactions, the fuel cell unit 2 performs the power generation operation.

And, through the oxidation reaction of Fe shown in formula (1) above, the fuel generation unit 1 consumes water vapor supplied from the fuel cell unit 2, generates a hydrogen gas, and supplies the hydrogen gas to the fuel cell unit 2.

Note that the fuel cell system according to the one embodiment of the present invention shown in Fig. 1 is a secondary battery type fuel cell system which is capable of performing not only a power generation operation but also a charge operation. In the charge operation, the switch SW1 is turned OFF and the switch SW2 is turned ON, and thereby, the fuel cell unit 2 is electrically connected to a power supply 10. In this state, the fuel cell unit 2 operates as an electrolysis apparatus, where reactions reverse to the reactions shown in formulae (3) and (4) above take place, such that water vapor is consumed and hydrogen gas is generated on the fuel electrode 2B side, and at the fuel generation unit 1, change from iron oxide into iron proceeds through the reduction reaction shown in formula (2) above, and thereby an amount of iron remaining in the fuel generation unit 1 is increased, that is, the fuel generation unit 1 is recovered, the hydrogen gas supplied from the fuel cell unit 2 is consumed to thereby generate water vapor, and the generated water vapor is supplied to the fuel cell unit 2.

The electrolyte membrane 2A can be produced by using, for example, a chemical vapor deposition-electrochemical vapor deposition (CVD-EVD) method in the case where a solid oxide electrolyte is employed, and in the case where a solid polyelectrolyte is employed, the electrolyte membrane 2A can be produced by using, for example, a coating method.

The fuel electrode 2B and the air electrode 2C may each have a structure, for example, that includes a catalyst layer in contact with the electrolyte membrane 2A and a diffusion electrode laid on the catalyst layer. As the catalyst layer, for example, one that is constituted with carbon black supporting platinum black or a platinum alloy thereon may be used. As a material of the diffusion electrode of the fuel electrode 2B, carbon paper, an Ni-Fe cermet, an Ni-YSZ cermet, etc. can be used, for example. As a material of the diffusion electrode of the air electrode 2C, carbon paper, an La-Mn-O compound, an La-Co-Ce compound, etc. can be used, for example. The fuel electrode 2B and the air electrode 2C can each be formed, for example, by using a vapor-deposition method or the like.

In the fuel cell system according to the one embodiment of the present invention, since the fuel gas is forcibly circulated by the circulation unit 3, the fuel gas flows at a higher speed in comparison with a case of natural diffusion, and this accordingly makes it possible to supply the fuel electrode 2B with an ample amount of fuel to be used in the reaction that takes place at the fuel electrode 2B. This contributes to larger output compared with the case of natural diffusion.

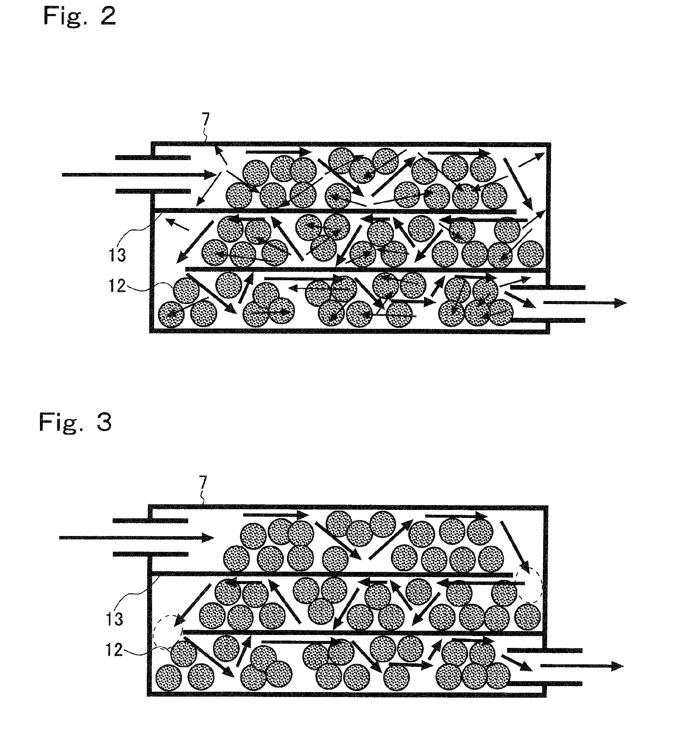

In the fuel cell system according to the one embodiment of the present invention, the flow rate of the gas circulated by the circulation unit 3 is periodically changed, and thereby pressure pulsation of gas is generated, and the pressure pulsation of gas is propagated from the circulation unit 3 to the fuel generation unit 1. This helps improve the efficiency of the fuel generation performed by the generation unit 1. Reason why the efficiency of the fuel generation is improved this way will be described in detail with reference to Fig. 2 and Fig. 3.

Fig. 2 and Fig. 3 each show an example of the fuel generation unit 1 and the container 7. In Fig. 2 and Fig. 3, the fuel generation unit 1 is constituted with a plurality of spherical pellets 12, and the container 7 is provided with a dividing panel 13 for lengthening a gas flow passage. In Fig. 2 and Fig. 3, a gas flow direction is schematically indicated by an arrow. The pellets shown in Fig. 2 and Fig. 3 are spherical in shape, but the pellets may be shaped in another shape.

In the present embodiment, since the pressure pulsation of gas is propagated from the circulation unit 3 to the circulation gas supply port of the container 7, gas dispersion due to pressure difference caused by the pressure pulsation arises all over inside the container 7 as shown in Fig. 2, and this allows the circulation gas to be fully distributed, even to where fluid resistance is large. This helps reduce proportion of areas in the fuel generation unit 1 where the circulation gas does not reach so that no reaction takes place, and as a result, the fuel generating efficiency is improved. In contrast to this case, in a case where a fixed amount of circulation gas flows into and out of the container 7 without propagation of pressure pulsation of gas to the circulation gas discharge port or the circulation gas supply port of the container 7, the circulation gas flows to reach only places with low fluid resistance as shown in Fig. 3, and this increases, in the fuel generation unit 1, the proportion of areas where the circulation gas does not reach so that no reaction takes place therein. As a result, no improvement is achieved in fuel generating efficiency.

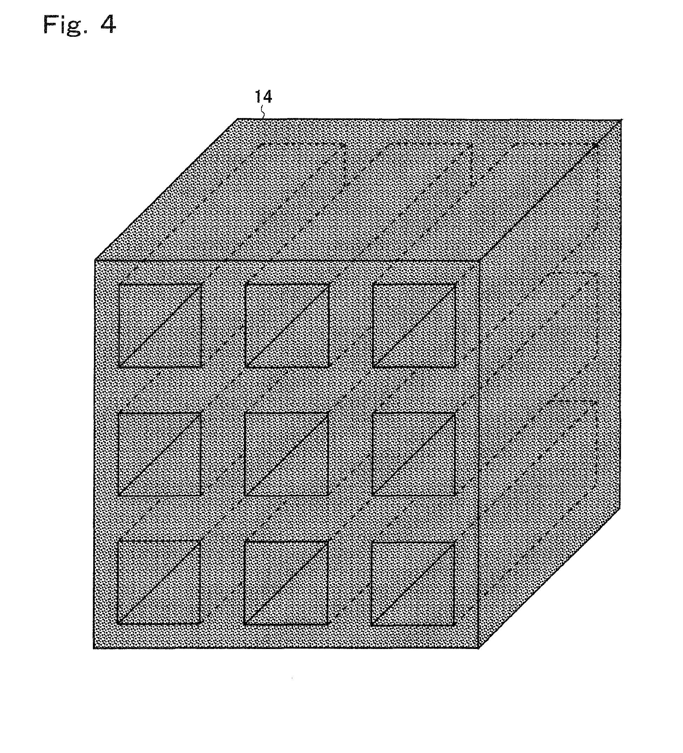

Instead of forming the fuel generation unit 1 with a plurality of pellets, the fuel generation unit 1 may be constituted with, for example, a molded body 14 having a plurality of gas flow passages formed therein as shown in Fig. 4. In the example shown in Fig. 4, the gas flow passages are each shaped square in section, but the gas flow passages may be shaped otherwise. For example, if the gas flow passages are formed to have a regular hexagonal sectional shape, a honeycomb-structured molded body is obtained.

Since the molded body 14, which constitutes the fuel generation unit 1, is a porous body, gas can permeate into the molded body 14, where flow resistance is larger than in the gas flow passages. Thus, with the feature of the present embodiment, in the case where the fuel generation unit 1 is constituted with a molded body, too, the propagation of pressure pulsation helps gas to permeate into the molded body where flow resistance is large, and reactions inside the molded body contribute to improvement of the fuel generating efficiency.

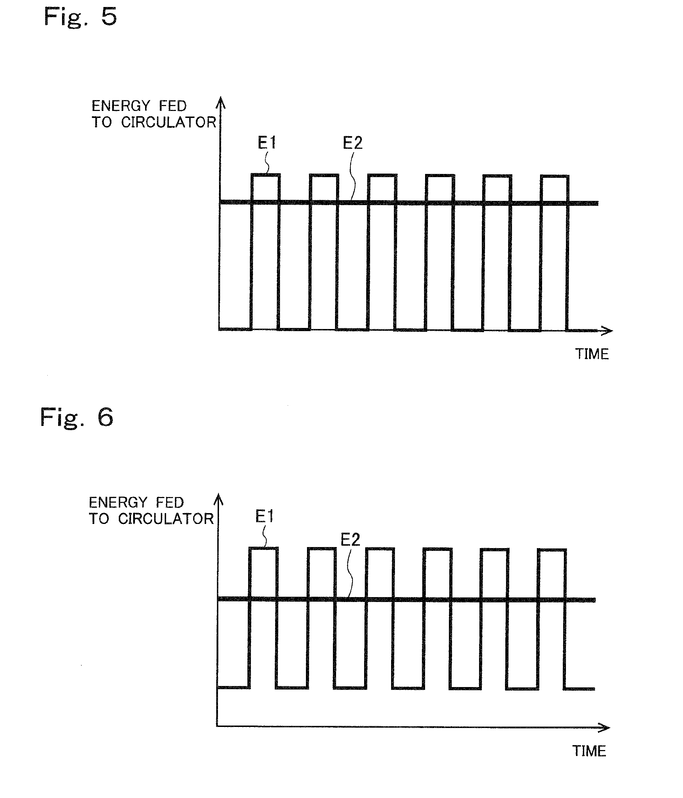

Further, in comparison between a case of periodically changing the flow rate of the gas circulated by the circulation unit 3 and a case of setting the flow rate of the gas circulated by the circulation unit 3 to a fixed rate, assuming generating the same amount of fuel in both cases, as shown in Fig. 5 and Fig. 6, the total amount of energy E1 fed to the circulation unit 3 when the flow rate of the gas circulated by the circulation unit 3 is periodically changed can be smaller than the total amount of energy E2 fed to the circulation unit 3 when the flow rate of the gas circulated by the circulation unit 3 is set to a fixed rate. That is, by periodically changing the flow rate of the gas circulated by the circulation unit 3, it is possible to improve the fuel generating efficiency, and thus to improve the total energy efficiency of the fuel cell system. The energy E1 in Fig. 5 indicates a case where one of the two flow rates alternately repeated as the flow rate of the gas circulated by the circulation unit 3 is a zero flow rate, while the energy E1 in Fig. 6 indicates a case where neither of the two flow rates alternately repeated as the flow rate of the gas circulated by the circulation unit 3 is a zero flow rate.

As mentioned above, in the case where the flow rate of the gas circulated by the circulation unit 3 is set to a fixed rate, the circulation gas flows only through places with small resistance as shown in Fig. 3, and consequently, even if the set fixed rate is changed to another rate, the change of the fixed rate results in only a small change in amount of fuel generation. Accordingly, in the case where the flow rate of the gas circulated by the circulation unit 3 is set to a fixed rate, it is difficult to accurately control the amount of fuel generation, and further, the fuel generating efficiency is low.

In contrast, in the case where the flow rate of the gas circulated by the circulation unit 3 is periodically changed, as mentioned above, gas dispersion takes place all over as shown in Fig. 2, allowing the circulation gas to be distributed even to places with high resistance, the amount of fuel generation greatly changes in response to change in difference between the two alternately repeated flow rates. Thus, in the case where the flow rate of the gas circulated by the circulation unit 3 is periodically changed, it is possible to accurately control the amount of fuel generation with ease, and further, the fuel generating efficiency is high.

Next, examples of control by the control unit 9 will be described.

### <First Control Example>

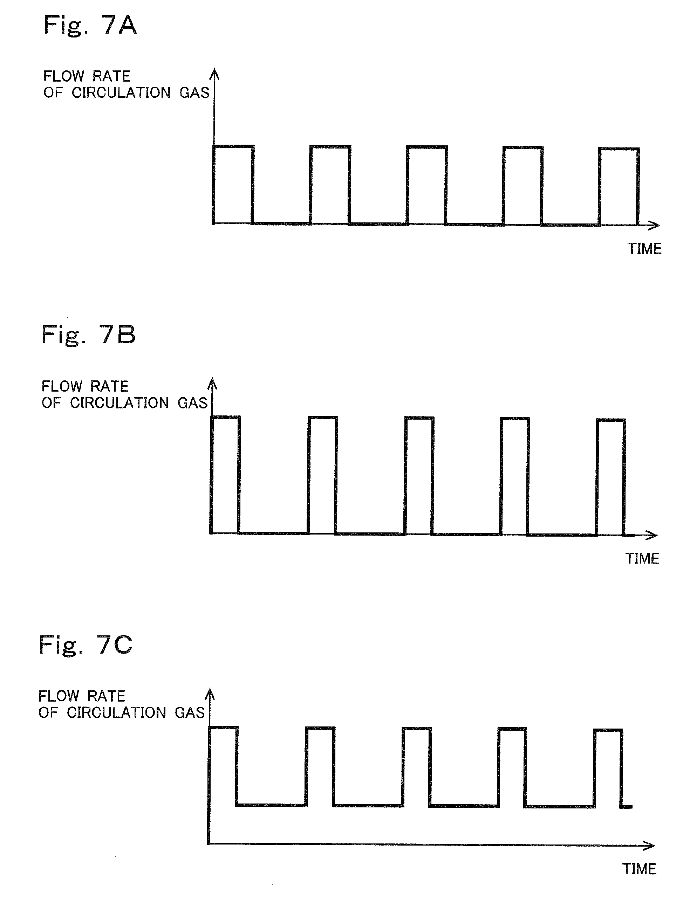

The control unit 9 controls the circulation unit 3 such that the flow rate of the gas circulated by the circulation unit 3 periodically changes as shown in Fig. 7A, Fig. 7B, or Fig. 7C, for example. A frequency of change of the flow rate of the gas circulated by the circulation unit 3, an appropriate range of which differs depending on the structure of the fuel generation unit 1, is assumed to be set in the range of, for example, from between 0.1 and 0.9 Hz to between 11 and 19 Hz

The cases shown in Fig. 7A and Fig. 7B are similar to each other in that a smaller one of the two alternately repeated two flow rates is a zero flow rate, but are different from each other in value of a larger one of the two flow rates and in ratio of time periods given to the two flow rates. Specifically, a value of the larger flow rate is larger in Fig. 7B than in Fig. 7A, but the time period during which the flow rate is large is longer in Fig. 7A than in Fig. 7B. That is, in the control example of Fig. 7A, the value of the larger flow rate is not very large but is set to continue for a long time period, while, in the control example of Fig. 7B, quite a large flow rate continues for a short time period. The control examples of Fig. 7B and Fig. 7C employ the same value for the larger one of the two alternately repeated flow rates and the same ratio between time periods of the two flow rates, but employ different values for the smaller one of the two flow rates. Specifically, while the value of the smaller flow rate is zero in Fig. 7B, the value of the smaller flow rate in Fig. 7C is larger than zero. Thus, difference between the two flow rates is smaller in the control example of Fig. 7C than in the control example of Fig. 7B.

### <Second Control Example>

The volume of the fuel generation unit 1 changes each time the oxidation reaction shown in formula (1) above and the reduction reaction shown in formula (2) above take place, and along with such volume change of the fuel generation unit 1, some of the fine particles, which are mainly Fe, come off from the pellets, the molded body, or the like, and such fine particles may collect in, for example, areas enclosed by dotted lines in Fig. 3 to clog corresponding ones of the gas flow passages. Such clogging of the gas flow passages increases pressure loss in the fuel generation unit 1, and thus, if the circulation unit 3 continues to operate at the same capacity, the flow rate of the gas circulated is reduced to disadvantageously reduce the amount of power generated by the fuel cell unit 2.

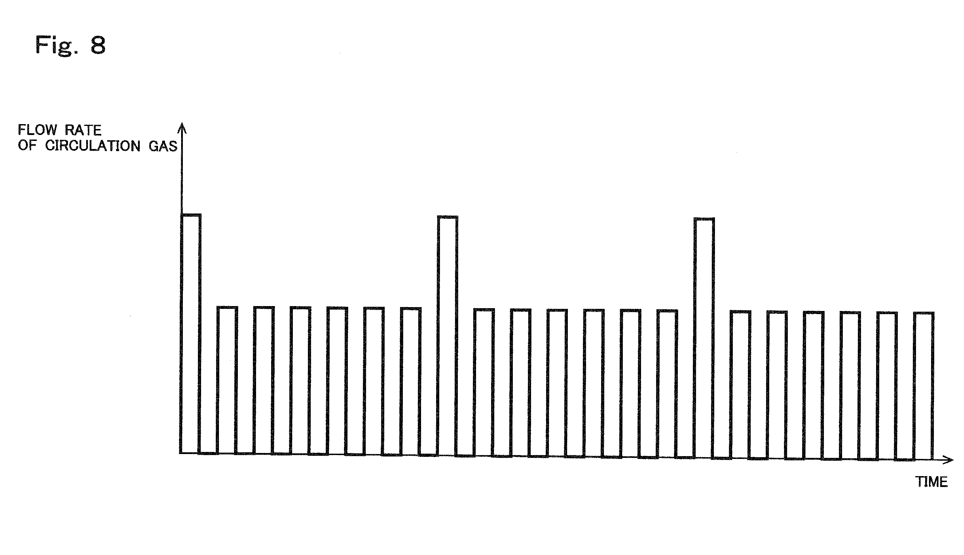

To prevent this, the control unit 9 may perform control, for example, such that the difference between the two flow rates becomes larger than usual at regular time intervals as shown in Fig. 8. In Fig. 8, the difference between the two flow rates is made larger than usual by increasing the value of the larger flow rate, but the flow rate difference may be made larger by other methods. For example, in the case where the value of the smaller flow rate is not zero, the value of the smaller flow rate may be made still smaller, or the value of the smaller flow rate may be made still smaller along with making the value of the larger flow rate still larger. Alternatively, the smaller and larger flow rates may both be made larger as long as the difference between the two flow rates is increased. By controlling such that the difference between the two flow rates becomes larger than usual in this manner, it is possible to prevent the gas flow passages from being clogged with fine particles from the pellets, the molded body, or the like of the fuel generation unit 1, or to increase possibility for fine particles clogging a gas flow passage to move to where the fine particles do not clog any gas flow passage.

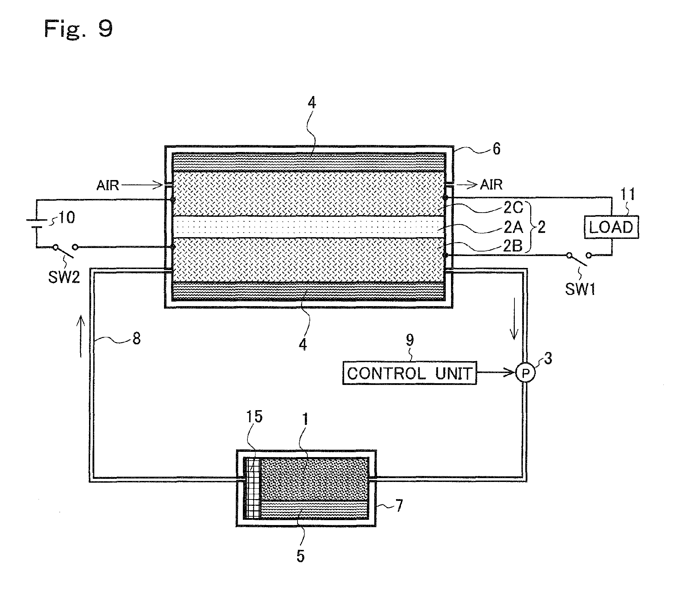

In some cases, in order to prevent fine particles from the pellets, the molded body, or the like of the fuel generation unit 1 from polluting the fuel cell unit 2, a filter 15 that captures fine particles is disposed between a circulation gas flow-out side of the fuel generation unit 1 and a circulation gas flow-in side of the fuel cell unit 2 as shown in Fig. 9. By the control unit 9 controlling such that the difference between the two flow rates becomes larger than usual at regular time intervals as described above, it is possible to prevent clogging of the filter 15, or to recover the filter 15 from a clogged state.

### <Third Control Example>

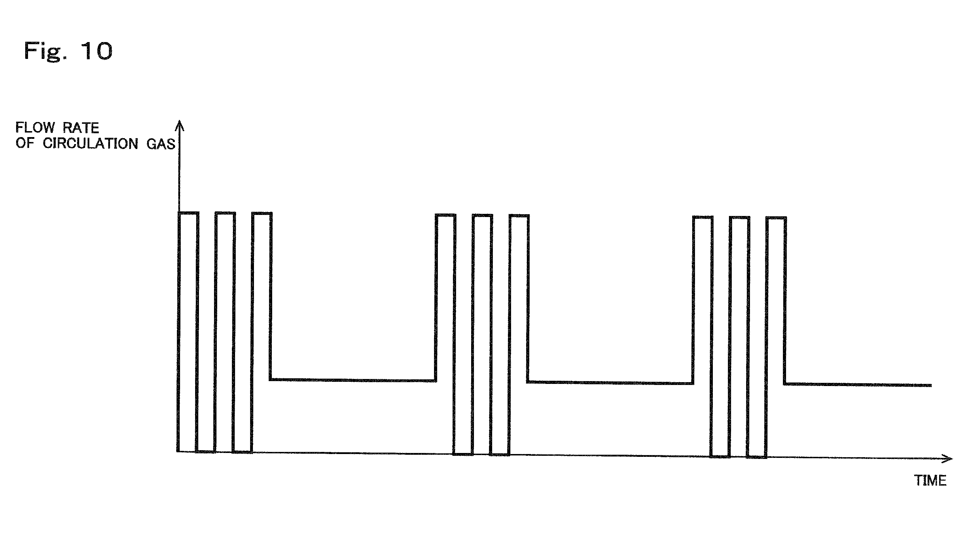

The control unit 9 may have a first control mode where the flow rate of the gas circulated by the circulation unit 3 is periodically changed and a second control mode where the flow rate of the gas circulated by the circulation unit 3 is set to a fixed flow rate, such that the control unit 9 switches between the first and second control modes as shown in Fig. 10, for example. For example, the control unit 9 may choose the first control mode when a stabilized output of the fuel cell unit 2 is required.

### <Fourth Control Example>

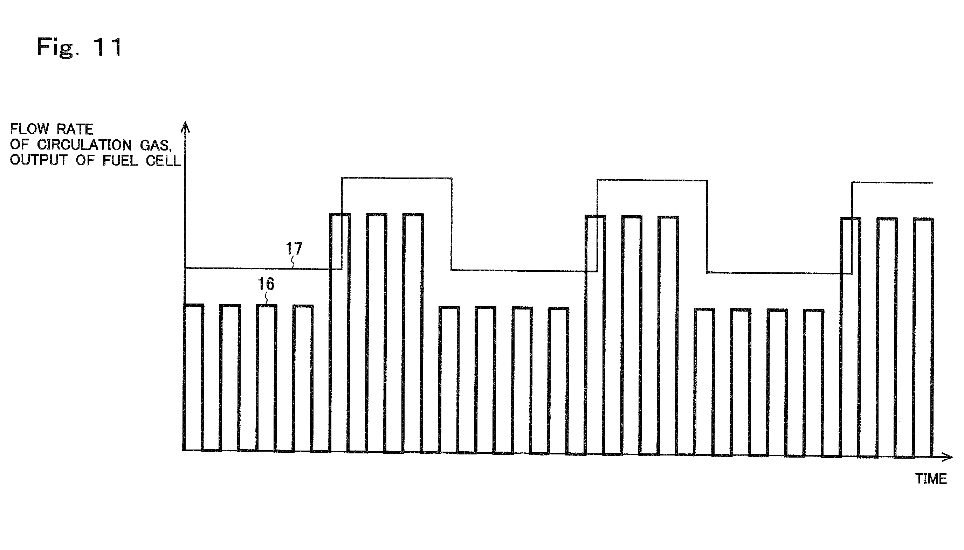

The control unit 9 may change the difference between the two flow rates for the purpose of changing the output of the fuel cell unit 2 in response to change in electric power required by an external load. When the control unit 9 changes the difference between the two flow rates, this change is followed by change in amount of fuel generated in the fuel generation unit 1, as a result of which the output of the fuel cell unit 2 is changed (see Fig. 11). In Fig. 11, reference numerals 16 and 17 denote the flow rate of the circulation gas and the output of the fuel cell unit 2, respectively.

### <Fifth Control Example>

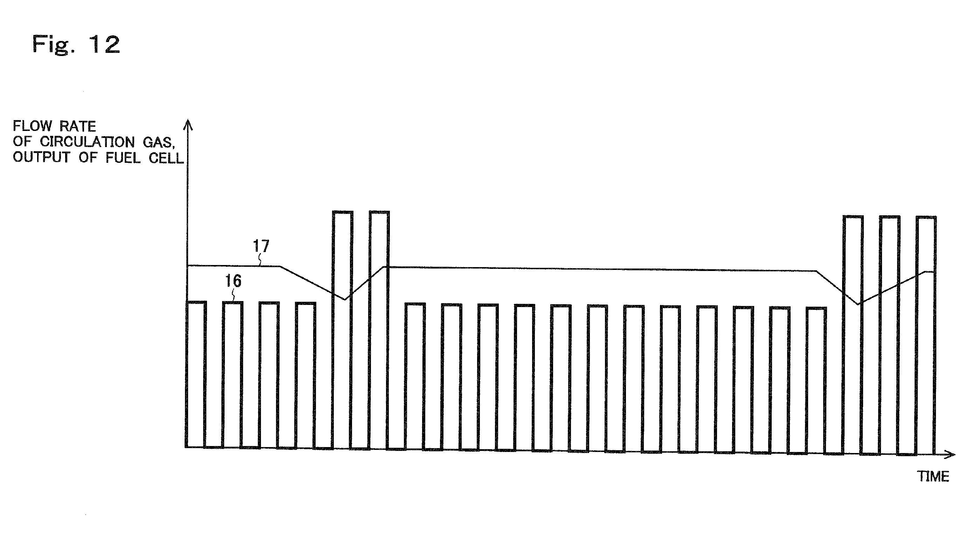

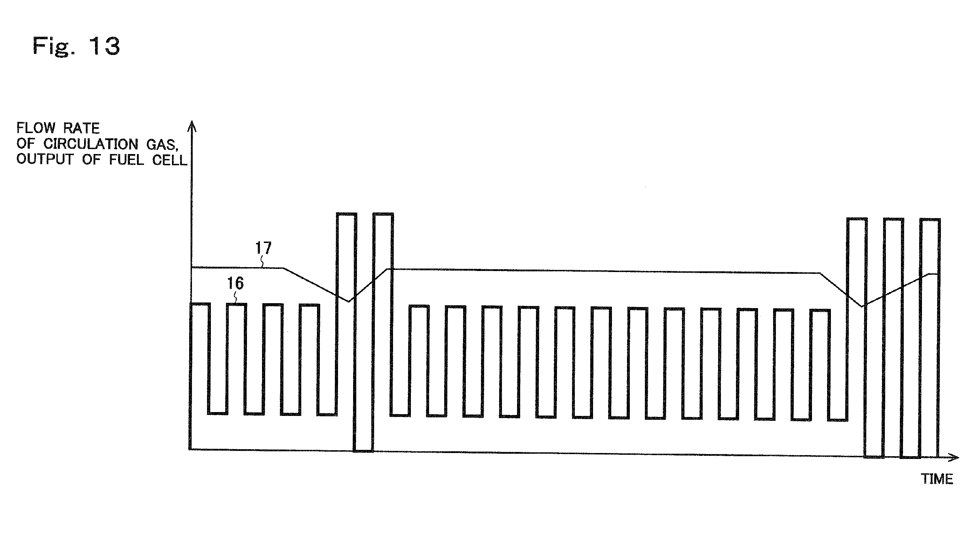

In a case where clogging is caused in the gas flow passages by fine particles coming off from the pellets, the molded body, or the like of the fuel generation unit 1, the output of the fuel cell unit 2 sharply declines in a short period of time. Therefore, the control unit 9 may acquire output information of the fuel cell unit 2 such that, in the case where the output of the fuel cell unit 2 has sharply declined in a short period of time, the control unit 9 performs control to increase the difference between the two flow rates, and when fine particles clogging the gas flow passages have moved to where the fine particles do not clog any gas flow passage and the output of the fuel cell unit 2 has been recovered, the control unit 9 performs control to bring the difference between the two flow rates back to usual (see Fig. 12 and Fig. 13). Reference numerals 16 and 17 in Fig. 12 and Fig. 13 denote the flow rate of the circulation gas and the output of the fuel cell unit 2, respectively.

In the control example shown in Fig. 12, in the case where the output of the fuel cell unit 2 has sharply declined in a short period of time, only the larger one of the two flow rates is changed. On the other hand, in the control example shown in Fig. 13, in the case where the output of the fuel cell unit 2 has sharply declined in a short period of time, the two flow rates are both changed in increasing the difference between the two flow rates. That is, control is performed such that the larger flow rate is made still larger and the smaller flow rate is made still smaller.

In the present control example, it is preferable that the control unit 9 store information defining "sharply" and "short period of time" mentioned above (for example, a threshold rate-of-change of the output of the fuel cell unit 2). For example, control may be performed such that, in a case where the rate of the output of the fuel cell unit 2 to energy fed to the circulation unit 3 in a set period of time has fallen equal to or lower than half the rate of a directly previous set period of time, the output is determined to have sharply declined in a short period of time, and the difference between the two flow rates is made larger than usual.

### <Sixth Control Example>

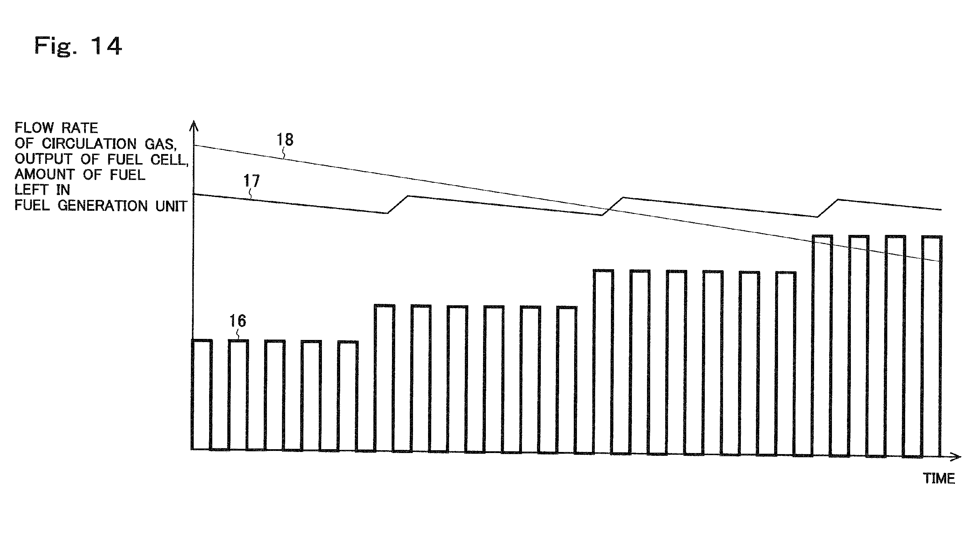

At the fuel generation unit 1, when an amount of remaining fuel (rate of unoxidized fuel) reduces, the fuel generating efficiency is lowered to cause a decrease in amount of fuel generated at the fuel generation unit 1. Thus, if operation is continued without changing the amount of the gas circulated by the circulation unit 3, the output of the fuel cell unit 2 is lowered. To prevent this, in the present control example, the control unit 9 increases the amount of fuel generation by gradually increasing the difference between the two flow rates according to decrease in amount of fuel remaining in the fuel generation unit 1, to thereby make up for the lowered fuel generating efficiency (see Fig. 14). This makes it possible to alleviate reduction in output of the fuel cell unit 2 caused when the amount of fuel remaining in the fuel generation unit 1 is reduced, and thus to obtain a stabilized output of the fuel cell unit 2 until the fuel is completely consumed. Reference numerals 16, 17, and 18 in Fig. 14 denote the flow rate of the circulation gas, the output of the fuel cell unit 2, and the amount of fuel remaining in the fuel generation unit 1, respectively.

In the present embodiment, advisably, the control unit 9 acquires a result of detection performed by a remaining fuel amount detecting unit which detects the amount of fuel remaining in the fuel generation unit 1. Examples of the remaining fuel amount detecting unit mentioned above include a device that detects a recovery state of the fuel generation unit 1 on a basis of change in weight of the fuel generation unit 1, and a device that detects the recovery state of the fuel generation unit 1 on a basis of change in magnetic penneability of the fuel generation unit 1 in a case where the fuel generation unit 1 is made of Fe as in the present embodiment. The remaining fuel amount detecting unit may be disposed inside the fuel cell system, or may be disposed outside the fuel cell system.

In the case where the two flow rates are alternately repeated as described above, it is desirable to control the larger flow rate to be larger than the value of the gas flow rate adopted in a case where the gas flow rate is fixed to a constant value (normally, a value obtained by adding some margin to the gas flow rate necessary to generate a required amount of fuel), and control the smaller flow rate to be smaller than the value of the fixed gas flow rate.

In the above embodiments, two flow rates are alternately repeated, but this is not meant as a limitation, and more than two flow rates may be adopted in combination as long as it is able to generate pressure pulsation of gas.

### <Modified Example>

In each of the above embodiments, a solid oxide electrolyte is used as the electrolyte membrane 2A of the fuel cell unit 2, such that water is generated on the fuel electrode 2B side in power generation. With this structure, only a passage that transmits water generated on the fuel electrode 2B side to the fuel generation unit 1 and a passage that transmits fuel from the fuel generation unit 1 to the fuel electrode 2B are required, and this is advantageous to achieve simple and compact devices. On the other hand, as in the fuel cell disclosed in JP-A-2009-99491, it is also possible to use a solid polyelectrolyte that transmits hydrogen ions as the electrolyte membrane 2A of the fuel cell unit 2. In this case, since water is generated in power generation on the side of the air electrode 2C which is the oxidant electrode of the fuel cell unit 2, it is necessary to additionally provide a flow passage that transmits the thus generated water to the fuel generation unit 1. Furthermore, instead of making one fuel cell unit 2 perform both power generation and electrolysis of water as in the above embodiments, there may be adopted a structure where a fuel cell (such as a solid oxide fuel cell dedicated to power generation) and a water electrolysis unit (such as a solid oxide fuel cell dedicated to electrolysis of water) are parallelly connected to the fuel generation unit 1 on the gas flow passage.

Moreover, instead of using hydrogen as the fuel for the fuel cell unit 2 as in the above embodiments, a reducing gas other than hydrogen gas, such as carbon monoxide gas and hydrocarbon gas, may be used as the fuel for the fuel cell unit 2.

Furthermore, instead of using air as the oxidizing gas as in the above embodiments, oxidizing gas other than air may be used.

### List of Reference Signs

- 1: fuel generation unit
- 2: fuel cell unit
- 2A: electrolyte membrane
- 2B: fuel electrode
- 2C: air electrode
- 3: pump
- 4, 5: heater
- 6, 7: container
- 8: pipe
- 9: control unit
- 10: power supply
- 11: load
- 12: spherical pellet
- 13: dividing panel
- 14: molded body
- 15: filter
- SW1, SW2: switch

## Claims

1. A fuel cell system, comprising:
a fuel generation unit that generates fuel through a chemical reaction;
a fuel cell unit that performs power generation by using the fuel supplied from the fuel generation unit;
a circulation unit that forcibly circulates gas that includes the fuel or a product of the power generation between the fuel generation unit and the fuel cell unit; and
a control unit that controls the circulation unit,
wherein
the control unit periodically changes a flow rate of the gas circulated by the circulation unit.

2. The fuel cell system according to claim 1,
wherein
the control unit periodically changes the flow rate of the gas circulated by the circulation unit by alternate repetition of two flow rates.

3. The fuel cell system according to claim 2,
wherein
the control unit controls such that a value of a larger flow rate of the two flow rates is larger than a value of a flow rate that is set in a case where the gas is circulated at a fixed flow rate, and such that a value of a smaller flow rate of the two flow rates is smaller than the value of the flow rate that is set in the case where the gas is circulated at the fixed flow rate.

4. The fuel cell system according to claim 2 or 3,
wherein
the control unit controls such that the value of the smaller flow rate of the two flow rates is zero.

5. The fuel cell system according to any one of claims 1 to 4,
wherein
the control unit changes a mode of periodic change of the flow rate of the gas circulated by the circulation unit.

6. The fuel cell system according to claim 5,
wherein
the control unit changes the mode of the periodic change by changing a difference between the two flow rates of the gas circulated by the circulation unit.

7. The fuel cell system according to claim 6,
wherein
the control unit changes the difference between the two flow rates by making the larger flow rate of the two flow rates still larger, or by making the smaller flow rate of the two flow rates still smaller.

8. The fuel cell system according to any one of claims 5 to 7,
wherein
the control unit acquires information of output of the fuel cell unit and changes the mode of the periodic change on a basis of the information.

9. The fuel cell system according to claim 8,
wherein,
when a rate of the output of the fuel cell unit with respect to energy fed to the circulation unit in a set period of time has fallen equal to or lower than half the rate in a directly previous set period of time, the control unit controls to increase the difference between the two flow rates of the gas circulated by the circulation unit.

10. The fuel cell system according to any one of claims 5 to 7,
wherein
the control unit changes the mode of the periodical change in order to change the output of the fuel cell unit according to change in electric power required by an external load.

11. The fuel cell system according to any one of claims 5 to 7,
wherein
the control unit changes the mode of the periodic change according to an amount of fuel remaining in the fuel generation unit.

12. The fuel cell system according to claim 11, further comprising
a remaining fuel amount detecting unit that detects the amount of fuel remaining in the fuel generation unit,
wherein
the remaining fuel amount detecting unit detects a recovery state of the fuel generation unit on a basis of change in weight of the fuel generation unit or on a basis of change in magnetic permeability of the fuel generation unit.

13. The fuel cell system according to claim 11 or 12,
wherein
the control unit changes the mode of the periodic change in a stepwise manner.

14. The fuel cell system according to any one of claims 1 to 13,
wherein
the control unit has a first control mode where the control unit periodically changes the flow rate of the gas circulated by the circulation unit and a second control mode where the control unit sets the flow rate of the gas circulated by the circulation unit to a fixed flow rate.

15. The fuel cell system according to any one of claims 1 to 14,
wherein
the circulation unit includes a circulator that uses mechanical energy.

16. The fuel cell system according to any one of claims 1 to 15,
wherein
the fuel generation unit is constituted with a plurality of pellets, or the fuel generation unit is constituted with a molded body including a porous body in which a gas flow passage is formed.
